# EUROPÄISCHE PATENTSCHRIFT

(11) **EP 3 408 347 B1**
(45) Veröffentlichungstag und Bekanntmachung des Hinweises auf die Patenterteilung: **24.04.2019**
(21) Anmeldenummer: 16703078.2
(22) Anmeldetag: 28.01.2016
(51) Int. Cl.: C09K 8/80, C08L 61/00, E21B 43/267

(54) **MODIFIZIERTE REAKTIVHARZZUSAMMENSETZUNGEN UND DEREN VERWENDUNG ZUR BESCHICHTUNG VON STÜTZMITTELN**
MODIFIED REACTIVE RESIN COMPOSITIONS AND USE THEREOF FOR COATING PROPPING AGENTS
COMPOSITIONS DE RÉSINE ACTIVE MODIFIÉES ET LEUR UTILISATION POUR LE REVÊTEMENT D'AGENTS DE SOUTÈNEMENT

(43) Veröffentlichungstag der Anmeldung: 05.12.2018
(73) Patentinhaber: Wacker Chemie AG, 81737 München (DE)
(72) Erfinder: KNÖR, Sebastian, 84547 Emmerting (DE); CALIMENTE, Daniel, Saline, Michigan 48176 (US); SCHLOSSER, Arndt, 84533 Stammham (DE)
(74) Vertreter: Mieskes, Klaus Theoderich
(86) Internationale Anmeldenummer: PCT/EP2016/051792
(87) Internationale Veröffentlichungsnummer: WO 2017/129244

(56) Entgegenhaltungen:
- DE-A1-102008 044 199
- US-A1- 2013 081 812
- KONCZOL L ET AL: "ULTIMATE PROPERTIES OF EPOXY RESINS MODIFIED WITH A POLYSILOXANE- POLYCAPROLACTONE BLOCK COPOLYMER", JOURNAL OF APPLIED POLYMER SCIENCE, JOHN WILEY & SONS, INC, US, Bd. 54, Nr. 6, 7. November 1994 (1994-11-07), Seiten 815-826, XP000475870, ISSN: 0021-8995, DOI: 10.1002/APP.1994.070540612

## Beschreibung

Die vorliegende Erfindung betrifft die Verwendung modifizierter Reaktivharzzusammensetzungen als Beschichtungsmittel für Stützmaterialien, die im sogenannten Hydraulic Fracturing (=Fracking) eingesetzt werden.

Das Fracking-Verfahren wird in der Erdöl- und Erdgasförderung eingesetzt und ist eine Methode zur Erzeugung, Weitung und Stabilisierung von Rissen im Gestein einer Lagerstätte im tiefen Untergrund, mit dem Ziel, die Permeabilität der Lagerstättengesteine zu erhöhen. Dadurch können darin befindliche Gase oder Flüssigkeiten leichter und beständiger zur Bohrung fließen und gewonnen werden.

Die erzeugten Risse müssen mit Stützmitteln offengehalten werden. Die derzeit verfügbaren, beschichteten oder unbeschichteten Stützmittel sind spröde und weisen nicht die notwendige Druckfestigkeit für die Förderung in großen Tiefen auf. Durch das Brechen des Stützmittels unter dem hohen Druck werden Feinteile frei, die die Risse verstopfen und die Öl- bzw. Gasfördermenge reduzieren.

Die nach dem Stand der Technik verfügbaren beschichteten Stützmittel weisen eine im Vergleich zu den unbeschichteten Stützmitteln verbesserte Beständigkeit auf. Der Effekt der Beschichtung, z.B. mit organischen Harzen, ist aber dadurch limitiert, dass die verfügbaren Beschichtungen selbst sehr spröde sind und ebenfalls zum Bruch bzw. zur Abplatzung neigen.

### Stand der Technik

WO2008088449 A2 offenbart eine Möglichkeit zur Verringerung der Sprödigkeit von Beschichtungen solcher Partikel, wobei thermisch härtende Reaktivharze wie beispielsweise Epoxy-Harze mit Block-Copolymeren und Haftvermittlern versetzt werden, um so eine Verbesserung der Schlagzähigkeit der Beschichtung zu erreichen. Nachteilig ist neben der Verwendung zweier Additive, dass der Zähigkeitsverbesserer zudem ein teures und aufwändig herzustellendes Blockpolymere ist.

US2012088699A schlägt vor, Partikel mit mindestens zwei oleophilen und hydrophoben Harzen zu beschichten, beispielsweise Epoxyharze und Siliconharze. Die so beschichteten Partikel verbessern die Ölausbeute und reduzieren die Menge an gefördertem Wasser. Die Verwendung von Siliconharzen macht diese Partikel teuer.

US8852682B2 offenbart Partikel zum Einsatz als Stützmaterialien, die eine mehrschichtige, ineinander verschachtelte Beschichtung aufweisen. Ein Füllstoff wird explizit während der einzelnen Prozessschritte zudosiert. Nachteilig ist das aufwändige Verfahren. Zur Beschichtung werden verschiedene Harze wie beispielsweise Phenolharze verwendet, die beispielweise als verstärkende Füllstoffe pyrogene Kieselsäuren enthalten.

US5422183A offenbart Partikel zum Einsatz als Stützmaterialien in Fracking-Verfahren, die ebenfalls eine zweischichtige Beschichtung aus Harzen aufweisen. Zur Beschichtung werden beispielsweise Phenolharze verwendet, wobei als Füllstoff ebenfalls pyrogene Kieselsäuren eingesetzt wird. Dieser wird nach dem ersten Coating-Schritt in die Zwischenphase der Einzelschichten eingebracht. Nachteilig bei beiden Schriften ist das sehr aufwändige, mehrstufige Verfahren, das teuer und zudem schwer zu kontrollieren ist.

US20140124200A offenbart die Verwendung von Hybridmaterialien, hergestellt durch chemische Verbindung von organischen Harzen und Siliconharzen zur Beschichtung von Stützmaterialen. Nachteilig ist hier die Verwendung teurer Siliconharze, ein zusätzlicher, aufwändiger Prozess zur chemischen Modifikation und die schwer zu kontrollierende Produktqualität bei Reaktion zweier verzweigter Polymere.

Weiterhin sind im Stand der Technik Verfahren allgemein bekannt, die zur Verringerung der Sprödigkeit von Beschichtungen führen. WO2010060861A1 beschreibt beispielsweise ein homogenes Reaktionsharz, das eine Verbesserung der mechanischen Eigenschaften Bruchzähigkeit und Schlagzähigkeit als ausgehärteter duroplastischer Kunststoff zeigt. Dabei wird beispielsweise in einem ungehärteten Epoxidharz mindestens ein Organopolysiloxan homogen verteilt mit Hilfe eines Siliconorganocopolymer, welches als Dispergiermittel

Das Dokument US 2013/081812 A1 betrifft das Beschichten von Stützmitteln, wobei ein Harz und ein Polysiloxan verwendet werden können.

### Aufgabe der Erfindung

Aufgabe der vorliegenden Erfindung war daher die Bereitstellung von kostengünstigen Beschichtungsmitteln für Stützmittel, eines Verfahrens zur Beschichtung von Stützmitteln und die beschichteten Stützmittel. Dabei sollen diese Stützmittel nach Beschichtung und Aushärtung die notwendige Härte aufweisen und gleichzeitig elastische Eigenschaften wie gute Schlagzähigkeit zeigen, damit es zu keinem Bruch oder zu Abplatzungen der Beschichtung kommt.

### Lösung der Aufgabe

Diese Aufgabe wird überraschenderweise gelöst von der Verwendung modifizierter Reaktivharzzusammensetzungen. Die verwendeten Reaktivharzzusammensetzungen enthalten
- (A) 80-99,5 Gew.% mindestens eines Reaktivharzes, und
- (B) 0,5-20 Gew.% mindestens eines linearen oder cyclischen Organopolysiloxans,
   mit der Maßgabe, dass
- (B) mindestens 3 aufeinanderfolgende Si-O-Einheiten aufweist
- (B) mindestens einen Si-C-verknüpften, seitenkettenständigen oder endständigen organischen Rest R¹ aufweist, wobei
   ▪ R¹ mindestens 4 Atomen enthält, die ausgewählt werden aus der Gruppe aus C, N, P, O und S, und
   ▪ in R¹ mindestens 2 dieser Atome ein C sein müssen, und
- in (B) das Verhältnis der Summe aller C-Atome zur Summe aller Si-Atome mindestens 2,05 beträgt, und
- (B) bei 20°C in fließfähiger Form vorliegt, oder durch Erwärmen in einem Temperaturbereich bis zu 250°C schmelzbar ist und dadurch in eine fließfähige Form gebracht werden kann.

Vorzugsweise liegt der kritische Spannungsintensitätsfaktor, also der K1c-Wert der erfindungsgemäßen Reaktivharzzusammensetzung bei mindestens 0,55 MN/m^{3/2}, bevorzugt mindestens 0,6 MN/m^{3/2}, besonders bevorzugt mindestens 0,75 MN/m^{3/2}.

Die Bestimmung des K1c-Wertes erfolgte gemäß ASTM D 5045 an Kompaktzugkörpern (CT-Prüfkörper) mit W = 35 mm und einer Abzugsgeschwindigkeit von 1 mm/min. Die CT-Prüfkörper mit Dicke 4,5 mm wurden mittels CNC-Fräse hergestellt, und ein Anriss von 3 mm wurde mit einer Klinge geschaffen.

Der Tg (= Glasübergangstemperatur) der erfindungsgemäßen Reaktivharzzusammensetzung liegt vorzugsweise im Bereich 0 °C bis 250 °C, bevorzugt im Bereich 50 °C bis 230 °C, besonders bevorzugt im Bereich 80 °C bis 180 °C.

Der Tg wird mittels DMTA (=Dynamisch-Mechanische Thermo-Analyse) in Torsion ermittelt. Der Wert Tg ist hierbei als das Maximum von tan delta definiert.
Messbedingungen:
- Messgerät: ARES-Rheometer (TA-Instruments)
- Temperaturbereich: 25°C - 360°C
- Heizrate: 4 K/min
- Frequenz: 1 Hz

Es wurden Proben mit folgenden Maßen vermessen: Breite: ca. 6 mm, Dicke: ca. 3 mm, Länge: ca. 40 mm (resultierende Einspannlänge: ca. 27 mm).

### Komponente (A)

Bevorzugt enthält die Reaktivharzzusammensetzung nur ein Reaktivharz (A). Die Reaktivharze (A) müssen eine feste nichtklebrige Beschichtung bei Umgebungstemperaturen bilden. Dies ist erforderlich, damit die beschichteten Partikel rieselfähig bleiben, so dass sie sich nicht unter normalen Lagerbedingungen agglomerieren. Die Beschichtung kann im Wesentlichen ausgehärtet werden, so dass wenig oder keine Vernetzung bei Einwirkung von Bedingungen im Bohrloch erfolgt. Die Beschichtung kann auch nur teilweise gehärtet werden oder mit anderen reaktiven Gruppen versehen werden, sodass eine kovalente Vernetzung unter den Bedingungen im Bohrloch erfolgt. Als Reaktionsharze (A) sind erfindungsgemäß alle polymeren oder oligomeren organischen Verbindungen geeignet, die mit einer für eine Härtungsreaktion ausreichenden Zahl geeigneter reaktiver Gruppen versehen sind. Dabei sind alle im Stand der Technik bekannten Reaktionsharze geeignet, die sich zu Duroplasten verarbeiten lassen, unabhängig vom jeweiligen Vernetzungsmechanismus, der bei der Härtung des jeweiligen Reaktionsharzes abläuft. Grundsätzlich lassen sie sich in drei Gruppen einteilen entsprechend der Art des Vernetzungsmechanismus durch Addition, Kondensation oder radikalische Polymerisation.

Aus der ersten Gruppe der durch Polyaddition vernetzten Reaktionsharze (A) werden bevorzugt ein oder mehrere Epoxidharze, Urethanharze und/oder lufttrocknende Alkydharze als Ausgangsmaterial ausgewählt. Epoxid-und Urethanharze werden in der Regel durch Zusatz stöchiometrischer Mengen eines Hydroxyl-, Amino-, Carboxyl- oder Carbonsäureanhydridgruppen enthaltenden Härters vernetzt, wobei die Härtungsreaktion durch Addition der Oxiran- bzw. Isocyanatgruppen des Harzes an die entsprechenden Gruppen des Härters erfolgt. Bei Epoxidharzen ist auch die sogenannte katalytische Härtung durch Polyaddition der Oxirangruppen selbst möglich. Lufttrocknende Alkydharze vernetzen durch Autoxidation mit Luftsauerstoff. Auch additionshärtende Siliconharze sind bekannt, vorzugsweise solche mit der Maßgabe, dass keine weiteren freien Silane enthalten sind.

Beispiele für die zweite Gruppe der durch Polykondensation vernetzten Reaktionsharze (A) sind vorzugsweise Kondensationsprodukte von Aldehyden, z.B. Formaldehyd, mit amingruppenhaltigen aliphatischen oder aromatischen Verbindungen, z.B. Harnstoff oder Melamin, oder mit aromatischen Verbindungen wie Phenol, Resorcin, Kresol usw., ferner Furanharze, gesättigte Polyesterharze und kondensationshärtende Silikonharze. Die Härtung erfolgt hierbei meist durch Temperaturerhöhung unter Abspaltung von Wasser, niedermolekularen Alkoholen oder anderen niedermolekularen Verbindungen.

Aus der dritten Gruppe der durch Polymerisation vernetzten Reaktionsharze sind ein oder mehrere Homo- oder Copolymerisate der Acrylsäure und/oder Methacrylsäure oder ihrer Ester, ferner ungesättigte Polyesterharze, Vinylesterharze und/oder Maleinimidharze als Ausgangsharze für die erfindungsgemäß modifizierten Reaktionsharze bevorzugt. Diese Harze weisen polymerisationsfähige Doppelbindungen auf, durch deren Polymerisation oder Copolymerisation die dreidimensionale Vernetzung bewirkt wird. Als Starter dienen zur Bildung freier Radikale befähigte Verbindungen, z.B. Peroxide, Peroxoverbindungen oder Azogruppen enthaltende Verbindungen.

Auch eine Initiierung der Vernetzungsreaktion durch energiereiche Strahlung, wie UV oder Elektronenstrahlung, ist möglich.

Nicht nur die vorstehend genannten Reaktionsharze (A), sondern auch alle anderen, die zur Herstellung von duroplastischen Kunststoffen geeignet sind, lassen sich in der erfindungsgemäß vorgeschlagenen Weise modifizieren und ergeben nach der Vernetzung und Härtung Duroplaste mit erheblich verbesserter Bruch- und Schlagzähigkeit, wobei andere wesentliche, für die Duroplasten charakteristische Eigenschaften, wie Festigkeit, Wärmeformbeständigkeit und Chemikalienresistenz, im Wesentlichen unbeeinflusst erhalten bleiben.

Die bevorzugten Reaktivharze (A) sind die Phenol-FormaldehydHarze. Diese Reaktivharze (A) umfassen wärmehärtende Phenolharze vom Resol-Typ und Phenol-Novolak-Harze, die durch Zugabe von Katalysator und Formaldehyd wärmereaktiv gemacht werden können. Die Reaktivharze (A) können entweder während der Beschichtung der Stützmittelpartikel vollständig ausgehärtet werden, oder nur teilweise gehärtet werden. Stützmittel mit nur teilweise gehärteter Beschichtung härten erst nach dem Einbringen in tiefere Erdschichten während des Fracking aus.

Besonders bevorzugt als Reaktivharze (A) sind Phenol-Novolak-Harze. Diese sind beispielsweise erhältlich bei Plastics Engineering Company, Sheboygan, USA, unter dem Namen Resin 14772. Wenn ein solches Reaktivharz verwendet wird, ist es erforderlich, dem Gemisch ein Vernetzungsmittel (C) hinzuzufügen, um die anschließende Aushärtung des Reaktivharzes zu bewirken. Hexamethylentetramin ist das bevorzugte Material als (C) für diese Funktion, da es sowohl als Katalysator und als Formaldehydquelle dient.
(A) wird in Mengen von 80-99,5 Gew.-% eingesetzt, bevorzugt in Mengen von 88-99 Gew.-% und insbesondere bevorzugt von 94-98 Gew.-%.

### Komponente (B)

Bevorzugt enthält die Reaktivharzzusammensetzung nur ein Organopolysiloxans (B).
(B) hat bevorzugt mindestens 5, besonders bevorzugt mindestens 10, aufeinanderfolgenden Si-O-Einheiten.

Das Verhältnis der Summe der C-Atome zur Summe der Si-Atome in (B) ist mindestens 2,05, bevorzugt mindestens 2,1 und besonders bevorzugt mindestens 3 sowie bevorzugt höchstens 40, besonders bevorzugt höchstens 20, insbesondere bevorzugt höchstens 10. Lineare oder cyclische (B) können geringfügig verzweigt sein oder geringfügig durch einen organischen Rest verbrückt sein.

Die durchschnittliche Anzahl an Verbrückungs- oder Verzweigungsstellen pro Molekül ist vorzugsweise ≤ 4, bevorzugt ≤ 2, besonders bevorzugt ≤ 1, ganz besonders bevorzugt <1.
(B) ist bevorzugt ein lineares Organopolysiloxan.

Die durchschnittliche Zahl der Si-Atome pro Molekül (B) ist vorzugsweise kleiner als 1000, bevorzugt kleiner 200, besonders bevorzugt kleiner 100.

(B) wird in Mengen von 0,5-20 Gew.-% eingesetzt, bevorzugt von 1-12 Gew.-% und insbesondere bevorzugt von 2-6 Gew.-%.

Eine weitere wichtige Eigenschaft von (B) ist, dass es bei 20°C in fließfähiger Form vorliegt, oder durch Erwärmen in einem Temperaturbereich bis zu 250°C schmelzbar ist und dadurch in eine fließfähige Form gebracht werden kann.

Definition für "fließfähige Form" von (B):
100 g (B) werden auf 10 cm² Fläche eines Siebs mit der Maschenweite 1 mm verteilt. Binnen 72 h fließt der wesentliche Anteil des Materials also mindestens 90% durch das Sieb. Das Material an (B) oberhalb der Siebmaschen welches mit einem Spatel abgestreift werden kann gilt als Rückstand welcher nicht durch das Sieb gelaufen ist. Dieser Rückstand wird gewogen um zu bestimmen, ob ein fließfähiges (B) vorliegt.

Der **organische Rest R¹ hat** mindestens 4 Atome, bevorzugt mindestens 6 Atome, besonders bevorzugt mindestens 7 Atome, die ausgewählt werden aus der Gruppe aus C, N, P, O und S, und davon sind mindestens 2 dieser Atome ein C, bevorzugt sind mindestens 3 dieser Atome ein C.

Beispiele für **nicht-substituierte Reste** R¹ sind Alkylreste, wie der n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Alkenylreste, Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.
Bevorzugt nicht-substituierte R¹ sind folgende Reste Phenyl-, α- Phenylethyl-, n-Octyl-, n-Dodecyl-, n-Hexadecyl-, n-Octadecyl-.

Beispiele für **substituierte Reste** R¹ sind Halogenalkylreste, wie der Perfluorhexylethylrest; Halogenarylreste, wie der o-, m- und p-Chlorphenylrest, **sowie alle für R¹ oben genannten nicht-substituierten Reste,** die mit folgenden Gruppen substituiert sind: Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen.
Bevorzugt für einen substituierten R¹ ist der 10-Carboxydecyl-Rest.

Weitere Beispiele für **substituierte Reste** R¹ sind kurze Alkylreste, wie der Methyl-, Ethyl-, n-Propyl-, iso-Propyl-, und Alkenylreste, wie der Vinyl- und der Allylrest, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen substituiert sein können, mit der Maßgabe, dass der substituierte Reste R¹ mindestens 4 Atomen ausgewählt aus der Gruppe aus C, N, P, O und S enthält, wobei mindestens zwei C-Atome enthalten sein müssen.
Bevorzugte substituierte Reste R¹ sind Hydroxypropyl- und Mercaptopropyl-.

Weitere bevorzugte substituierte Reste R¹ sind Epoxy-Reste der Formel 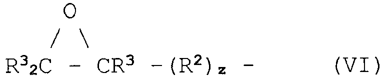 oder 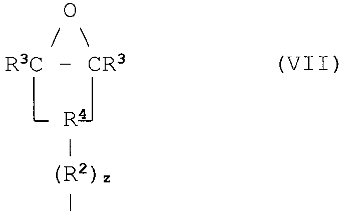 wobei
R² ein zweiwertiger Kohlenwasserstoffrest mit 1 bis 10 Kohlenstoffatomen je Rest ist, der durch ein
Ethersauerstoffatom unterbrochen sein kann,
R³ ein Wasserstoffatom oder ein einwertiger
Kohlenwasserstoffrest mit 1 bis 10 Kohlenstoffatomen je Rest ist, der durch ein Ethersauerstoffatom unterbrochen sein kann, R⁴ einen dreiwertigen Kohlenwasserstoffrest mit 3 bis 12 Kohlenstoffatomen je Rest ist und
z 0 oder 1 ist.

Beispiele für solche Reste R¹ sind
Glycidoxypropyl-,
3,4-Epoxycyclohexylethyl-,
2-(3,4-Epoxy-4-methylcyclohexyl)-2-methylethyl-,
3,4-Epoxybutyl-,
5,6-Epoxyhexyl-,
7,8-Epoxydecyl-,
11,12-Epoxydodecyl- und
13, 14-Epoxytetradecyl-rest.

Bevorzugte Epoxy-Reste sind der Glycidoxypropyl-Rest und der 3,4-Epoxycyclohexylethyl-Rest.

Weitere bevorzugte substituierte Reste R¹ sind *Amino-Reste* der allgemeinen Formel

-R⁶-[NR⁷-R⁸-]ₙNR⁷₂ (VIII),

wobei R⁶ ein zweiwertiger linearer oder verzweigter Kohlenwasserstoffrest mit 3 bis 18 Kohlenstoffatomen, vorzugsweise ein Alkylenrest mit 3 bis 10 Kohlenstoffatomen, bedeutet,
R⁷ ein Wasserstoffatom, einen Alkylrest mit 1 bis 8 Kohlenstoffatomen oder einen Acylrest, wie Acetylrest, bedeutet, vorzugsweise ein Wasserstoffatom ist,
R⁸ ein zweiwertiger Kohlenwasserstoffrest mit 1 bis 6 Kohlenstoffatomen, vorzugsweise ein Alkylenrest mit 1 bis 6 Kohlenstoffatomen, bedeutet,
n 0, 1, 2, 3 oder 4, vorzugsweise 0 oder 1 ist.

Weitere bevorzugte substituierte Reste R¹ sind Polyether-Reste der allgemeinen Formel

-CH₂CH₂(CH₂)ᵤO(C₂H₄O)ᵥ(C₃H₆O)_{w}(C₄H₈O)ₓ R⁹ (IX),

wobei
R⁹ einen Kohlenwasserstoffrest mit 1 bis 6 Kohlenstoffatomen **oder H,** bevorzugt Me **oder H** bedeutet,
u 0 oder eine ganze Zahl von 1 bis 16, vorzugsweise 1 bis 4, ist,
v 0 oder eine ganze Zahl von 1 bis 35, vorzugsweise 1 bis 25, ist und
w 0 oder eine ganze Zahl von 1 bis 35, vorzugsweise 1 bis 25 ist,
x 0 oder eine ganze Zahl von 1 bis 35, vorzugsweise 1 bis 25 ist,
mit der Maßgabe, dass die Summe v+w+x 1 bis 70, vorzugsweise 1 bis 50 ist.

Weitere bevorzugte substituierte Reste R¹ sind organische Polymer-Reste unter Ausbildung eines Polysiloxan-haltigen Copolymeres. Diese Copolymere können Blockcopolymere oder Graftcopolymere sein. Beispiele für geeignete organische Teile sind, aber nicht beschränkt auf, Polycaprolacton, Polyester, Polyvinylacetate, Polystyrole, Polymethylmethacrylate. Bevorzugt ist der organische Teil ein (co)Polymeres aus Vinylacetat, Methylmethacrylat oder aliphatischer Polyester. Besonders bevorzugt handelt es sich um Polycaprolacton. Die Blockcopolymere enthalten eine Siloxaneinheit mit einem Molekulargewicht von 1.000 - 10.000 g/mol, bevorzugt 1.500 - 5.000 g/mol, besonders bevorzugt 2.000 - 4.000 g/mol. Besonders bevorzugte Reste R¹ sind Polyether-Reste, Epoxyreste, insbesondere bevorzugt der Glycidoxypropyl-Rest und der 3,4-Epoxycyclohexylethyl-Rest, und organische Polymer-Reste, insbesondere bevorzugt ein Polycaprolacton-Rest.

**Die Herstellung der Reaktivharzzusammensetzungen** erfolgt in einer Ausführungsform durch Dispergieren von (B) in bei 20°C fließfähiges (A) bzw. in (A) welches durch vorheriges Erhitzen auf bis 250°C fließfähig gemacht wurde bzw. in (A) welches in einem geeigneten Lösungsmittel gelöst wurde. Wenn ein Lösungsmittel eingesetzt wurde kann dies danach eingedampft werden. Geeignete Lösungsmittel sind dem Fachmann bekannt und werden in Abhängigkeit des Reaktivharzes (A) ausgewählt. Beim Phenolharz sind geeignete Lösungsmittel beispielsweise Ethylacetat und Aceton. Welche Lösungsmittel für welche Reaktivharze geeignet sind, wird beispielsweise in folgendem Lehrbuch beschrieben: Polymer Handbook, Volume 2, 4. Ed.; J. Brandrup, E. H. Immergut, E. A. Grulke; John Wiley & Sons, Inc., 1999 (ISBN 0-471-48172-6). Geeignete Mischer sind beispielsweise Laborrührer, Planetenmischer, oder Dissolver, oder Rotor-Stator-Systeme, oder auch Extruder, Walzen, 3-Walzen-Stuhl, etc.
(B) kann sich beim dispergieren ganz oder teilweise in (A) lösen. Nicht gelöste Anteile liegen als zweite Phase in (A) dispergiert vor. Die mittlere Größe dieser Domänen ist vorzugsweise kleiner 50 µm, bevorzugt kleiner 20 µm, besonders bevorzugt kleiner 10 µm, ganz besonders bevorzugt kleiner 1 µm.

### Ein weiterer Gegenstand der vorliegenden Erfindung ist das Verfahren zur Herstellung von erfindungsgemäß beschichteten Stützmitteln.

Dem Fachmann sind diverse Möglichkeiten zur Beschichtung von Stützmitteln mit Harzen aus dem Stand der Technik bekannt. Diese Verfahren können auch für die Beschichtung von Stützmitteln mit den vorliegenden erfindungsgemäßen Reaktivharzzusammensetzungen eingesetzt werden.

In einer bevorzugten Ausführungsform wird die erfindungsgemäße Reaktivharzzusammensetzung in fließfähiger Form - also bereits bei 20°C fließfähig oder durch Erhitzen bis 250°C aufgeschmolzen und daher fließfähig oder in einem geeigneten Lösungsmittel gelöst und daher fließfähig- zusammen mit oder ohne mindestens einem Härter (C) und mit oder ohne mindestens einem Additiv (D), auf das Stützmittel aufgebracht beispielsweise durch Sprühen oder Mischen und anschließend ausgehärtet.

In einer besonders bevorzugten Ausführungsform wird die erfindungsgemäße Reaktivharzzusammensetzung durch Erhitzen bis 250°C aufgeschmolzen und daher fließfähig zusammen mit oder ohne mindestens einem Härter (C) und mit oder ohne mindestens einem Additiv (D), auf das Stützmittel aufgebracht beispielsweise durch Sprühen oder Mischen und anschließend ausgehärtet.

Für die Lösungsmittel gilt das weiter oben gesagte.

In einem alternativen nicht bevorzugten Herstellverfahren wird (B) zusammen mit geschmolzenem (A) und dem Stützmittel und optional Zugabe von Härter (C) und optional weiteren Additiven (D) gemischt und gehärtet. Die Reihenfolge der Zugabe der Komponenten (A), (B), (C) und (D) ist dabei variabel.

In einem weiteren alternativen Herstellverfahren für erfindungsgemäß beschichtete Stützmittel wird (A) mit einem geeigneten Lösemittel, Stützmittel und (B) gemischt. Der Mischung kann optional Härter (C) und evtl. verschiedene Additive (D) zugegeben werden. Anschließend wird das Lösungsmittel abgedampft und die so beschichteten Stützmittel werden gehärtet. Die Reihenfolge der Zugabe der Komponenten (A), (B), (C) und (D) ist variabel.

In einer besonders bevorzugten möglichen Ausführungsform wird ein geeignetes Stützmittel wie beispielsweise Sand auf ca. 170 - 260 °C vorgeheizt. In einem Mischer wird dann die erfindungsgemäße Reaktivharzzusammensetzung, ein geeigneter Härter (C) und optional verschiedene Additive (D) zugegeben.

Bei einer anderen Alternative wird ein geeignetes Stützmittel wie beispielsweise Sand auf ca. 170 - 260 °C vorgeheizt. In einem Mischer wird dann (A), (B), ein geeigneter Härter (C) und optional verschiedene Additive (D) zugegeben.

Die Erzeugung von Schichten ist wie folgt zu verstehen: Mehreren Schichten werden in mehreren aufeinanderfolgenden Beschichtungs- und Härtungszyklen erzeugt. D.h., dass nach dem Benetzen der Oberfläche des Stützmittels mit der erfindungsgemäßen Reaktivharzzusammensetzung diese Schicht zunächst teilweise oder vollständig gehärtet wird. Anschließend wird eine neue Schicht der erfindungsgemäßen Reaktivharzzusammensetzung aufgebracht und erneut teilweise oder vollständig gehärtet.

Dem gegenüber steht das Aufbringen der erfindungsgemäßen Reaktivharzzusammensetzung portionsweise in mehreren Schritten ohne eine substanzielle Zwischenhärtung der einzelnen Portionen und erst am Schluss erfolgt eine teilweise oder vollständige Härtung. Dies führt somit nur zu einer einzelnen Schicht.

### Stützmittel

Geeignete Stützmittel sind dem Fachmann aus dem Stand der Technik seit langem bekannt und können für die erfindungsgemäße Beschichtung eingesetzt werden. Stützmittel sind üblicherweise harte, hochfeste Teilchen wie beispielsweise Sand oder Kies aus Gesteinen wie Kalkstein, Marmor, Dolomit, Granit usw., aber auch Glasperlen, Keramikpartikel, Keramikkugeln und dergleichen, wobei diese Liste beispielhaft und nicht beschränkend ist. Bevorzugt zeigen die Stützmittelpartikel eine im Wesentlichen sphärische also kugelförmige Form, da diese genügend Zwischenraum lassen, damit das Rohöl bzw. Gas vorbeiströmen kann. Daher werden grobkörniger Sand, Glasperlen und Glashohlkugeln (sogenannte Microballons) als Stützmittel bevorzugt. Besonders bevorzugt wird Sand als Stützmittel verwendet.

Bevorzugt weisen die Stützmittelteilchen eine durchschnittliche Größe von 5.000 bis 50 µm auf, besonders bevorzugt eine durchschnittliche Größe von 1.500 bis 100 µm. Zudem zeigen sie bevorzugt ein Seitenverhältnis von Länge zu Breite von höchstens 2 : 1.

### Härter (C)

Geeignete Härter sind dem Fachmann aus dem Stand der Technik bekannt seit langem bekannt und werden entsprechend des verwendeten Reaktivharzes ausgewählt. Ein bevorzugter Härter (C) für Novolake ist Urotropin. (C) und somit auch Urotropin wird typischerweise in Mengen zwischen 8 und 20 Gew.-% bezogen auf die Menge an erfindungsgemäßer Reaktivharzzusammensetzung eingesetzt. Vorzugsweise wird Urotopin als wässrige Lösung auf die Schmelze des Reaktivharzes appliziert. Solche Methoden sind dem Fachmann ebenfalls bekannt und beispielsweise in US4732920 beschrieben.

### Additiv (D)

Geeignete Additive (D) sind dem Fachmann aus dem Stand der Technik ebenfalls seit langem bekannt. Nicht abschließende Beispiele sind Anti-Statik-Mittel, Trennmittel, Haftvermittler usw.

Geeignete Stützmittel, Härter (C) und Additive (D) werden beispielsweise in US4732920 und US2007/0036977 A1 beschrieben.

Für eine optimale Performance des erfindungsgemäß beschichteten Stützmittels müssen Typ und Spezifikation des Stützmittels, Typ und Spezifikation des Reaktivharzes (A), Organopolysiloxans (B), Härter (C) und ggf. Additive (D), die Art des Misch- und Beschichtungsprozesses, die Reihenfolge der Zugabe der Komponenten und die Mischzeiten je nach Anforderung der spezifischen Anwendung aufeinander abgestimmt werden. Eine Veränderung des Stützmittels erfordert unter Umständen eine Anpassung des Beschichtungsprozesses und / oder der verwendeten Härter (C) und Additive (D).

**Ein weiterer Gegenstand** sind somit auch die gemäß den oben beschriebenen Verfahren erhältlichen erfindungsgemäß **beschichteten Stützmittel.**

Bei den erfindungsgemäßen Stützmittel kann die Oberfläche des Stützmittels ganz oder teilweise beschichtet sein. Bevorzugt erscheinen bei der Untersuchung mit dem Rasterelektronenmikroskop mindesten 20% der sichtbaren Oberfläche des Stützmittels mit der erfindungsgemäßen Reaktivharzzusammensetzung beschichtet, besonders bevorzugt mindestens 50%.

Bevorzugt erscheinen bei der Untersuchung mit dem Rasterelektronenmikroskop mindestens 5% der StützmittelTeilchen auf ihrer sichtbaren Seite vollständig umhüllt, besonders bevorzugt mindestens 10%.

Der wesentliche Teil der Beschichtung auf dem erfindungsgemäßen Stützmittel ist 0,1 bis 100 um dick, bevorzugt 0,1 bis 30 µm, besonders bevorzugt 1 bis 20 µm.

Bevorzugt sind die erfindungsgemäßen Stützmittel mit weniger als drei Schichten der erfindungsgemäßen Reaktivharzzusammensetzung beschichtet, besonders bevorzugt mit nur einer Schicht.

Die erfindungsgemäße Reaktivharzzusammensetzung wird bevorzugt in Mengen von 0,1-20 Gew.-% bezogen auf das Gewicht des Stützmittels eingesetzt, bevorzugt von 0,5-10 Gew.-% und insbesondere bevorzugt von 1-5 Gew.-%.

**Ein weiterer Gegenstand** der vorliegenden Erfindung ist die **Verwendung** der erfindungsgemäß beschichteten **Stützmittel in Fracking-Förderverfahren für Erdöl und Erdgas. Vorteile der Erfindung** Die verwendeten Reaktivharzzusammensetzung weist verbesserte Verlaufseigenschaften in Beschichtungsprozessen auf. Dadurch werden Oberflächen gleichmäßiger beschichtet. Es können glattere und glänzendere Oberflächen erhalten werden.

Die Reaktivharzzusammensetzungen zeigen Vorteile in Beschichtung von Stützmittel, dadurch, dass der Ausschuss durch Verkleben des Stützmittels merklich reduziert wird.

Die gehärtete Reaktivharzzusammensetzung weist eine verbesserte Zähigkeit, Elastizität und Verformbarkeit bei gleicher Härte auf. Dadurch ist sie widerstandsfähiger gegenüber Belastungen, wie Schläge, Verformung oder Druck und hat eine geringere Neigung zu brechen.

Die Reaktivharzzusammensetzung weist als gehärtete Beschichtung für Stützmittel eine verbesserte Bruchfestigkeit, Zähigkeit und Elastizität auf. Die Beschichtung hat eine verringerte Neigung zu Brechen und Abplatzen und schützt das Stützmittel wirkungsvoller und dauerhafter vor hohen Drücken und Schlägen. Somit verbessert sich die Beständigkeit des gesamten Stützmittels. Herkömmliche Stützmittel gemäß dem Stand der Technik sind sehr spröde und haben eine große Neigung zu brechen. Durch Bruch des Stützmittels werden Feinanteile freigesetzt werden. Eine Freisetzung der Feinanteile wirkt sich negativ auf die Durchströmrate des Rohöls oder Gases aus, dadurch, dass die Zwischenräume zwischen den Stützmittel-Körner verstopft werden. Dadurch wird die Öl- bzw. Gasquelle schnell unrentabel. Neue Bohrungen oder Refracking werden erforderlich.

Demgegenüber sind die erfindungsgemäßen beschichteten Stützmittel widerstandsfähiger gegenüber Belastungen, wie Schläge, Verformung oder Druck und haben somit eine geringere Neigung zu brechen.

Ein weiterer Vorteil der erfindungsgemäßen Beschichtung liegt in ihrer Verformbarkeit, sodass diese häufig beim Bruch der spröden Stützmittel-Körner selber nicht bricht und somit die entstehenden Feinanteile wie eine plastischen Hülle umschließt oder zusammenhält und damit insgesamt deren Freisetzung reduziert wird.

Durch diese vorteilhaften Eigenschaften der erfindungsgemäß beschichteten Stützmittel kann der Öl- bzw. Gasfluss länger aufrechterhalten werden. Daraus ergeben sich entscheidende wirtschaftliche Vorteile und im Umweltschutz.

### Beispiele

Die nachfolgenden Beispiele erläutern die Erfindung, ohne dabei beschränkend zu wirken. In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000hPa, und bei Raumtemperatur, also bei 25°C, bzw. bei einer Temperatur, die sich beim Zusammengeben der Reaktanden bei Raumtemperatur ohne zusätzliche Heizung oder Kühlung einstellt, durchgeführt. Im Folgenden beziehen sich alle Viskositätsangaben auf eine Temperatur von 25°C.

### Verwendete Abkürzungen

Die Bedeutung der weiter oben verwendeten Abkürzungen gilt auch für die Beispiele:
- PTFE: = Polytetrafluorethylen
- UpM: = Umdrehungen pro Minute

### Beispiel 1

Ein Glaskolben wurde mit Stickstoff gespült, mit 475 g Novolak "Resin 14772" (Plastics Engineering Company, Sheboygan, USA) gefüllt und nochmals mit Stickstoff gespült. Die Masse wurde bei 120 °C geschmolzen. Dann wurde ein Rührer mit 420 UpM zugeschaltet. 25 g WACKER®WAX OH 350 D-RO (ein lineares Polysiloxan-Polycaprolacton Blockcopolymer mit Schmelzpunkt 50 °C und etwa 30-50 Si-O Einheiten) wurden zugegeben und bei 420 UPM, 10 Minuten gerührt. Die flüssige Masse wird heiß auf eine PTFE-Folie gegossen und mechanisch zerkleinert und somit ein Granulat hergestellt.

### Beispiel 2

Nach dem Verfahren von Beispiel 1 wurden 25 g SIPELL® RE 63 F (ein Polydimethylsiloxan mit Glycidoxypropyl-methylsiloxy-Einheiten und etwa 100-160 Si-O Einheiten; Viskosität, dynamisch bei 25 °C ca. 300 mPas) anstatt WACKER®WAX OH 350 D-RO (zu beziehen bei Wacker Chemie AG, München) eingearbeitet und ein Granulat erzeugt.

### Beispiel 3

Nach dem Verfahren von Beispiel 1 wurde 25 g Siliconöl 1 (ein Trimethylsiloxy-endgestoppertes Polydimethylsiloxan mit etwa 75-85 Si-0 Einheiten bestehend aus Dimethylsiloxyeinheiten und durchschnittlich 2,5 Glycidoxypropyl-methylsiloxy-Einheiten und durchschnittlich 2,5 (Hydroxy(polyethylenoxy)(polypropylenoxy)propyl)methylsiloxy-Einheiten pro Molekül; Viskosität, dynamisch bei 23 °C, Brookfield, 2300-2500 mPa.s) anstatt WACKER®WAX OH 350 D-RO eingearbeitet und ein Granulat erzeugt.

### Beispiel 4

Nach dem Verfahren von Beispiel 1 wurde 25 g Siliconöl 2 (ein α,ω-funktionelles Siliconöl mit etwa 15-20 Si-O Einheiten und endständigen Hydroxy(polyethylenoxy)-Gruppen mit etwa 10 Ethylenoxid-Wiederholungseinheiten; Viskosität, dynamisch bei 25 °C, Brookfield, 150-300 mPa.s), anstatt WACKER®WAX OH 350 D-RO eingearbeitet und ein Granulat erzeugt.

### Beispiel 5

Ein Glaskolben wurde mit Stickstoff gespült, mit 475 g Novolak "Resin 14772" (Plastics Engineering Company, Sheboygan, USA) gefüllt und nochmals mit Stickstoff gespült. Die Masse wurde bei 120 °C geschmolzen. Dann wurde ein Rührer mit 420 UpM zugeschaltet. 12,5 g WACKER®WAX OH 350 D-RO wurden zugegeben und bei 420 UPM, 5 Minuten gerührt. Danach wurden 12,5 g WACKER® AK 100 SILICONOEL, ein nicht-funktionelles, Trimethylsiloxy-endgestoppertes Polydimethylsiloxan, zugegeben und weitere 10 Minuten gerührt. Die flüssige Masse wird heiß auf eine PTFE-Folie gegossen und mechanisch zerkleinert.

### Vergleichsbeispiel 1 (V1)

Nach dem Verfahren von Beispiel 1 wurde 25 g WACKER® AK 100 SILICONOEL, ein nicht-funktionelles, Trimethylsiloxy-endgestoppertes Polydimethylsiloxan, anstatt WACKER®WAX OH 350 D-RO eingearbeitet.

Unerwartet zeigt sich, dass sich die erfindungsgemäßen Organopolysiloxane (B) gleichmäßig und fein im Reaktivharz verteilen. Sofern eine zweite Phase ausgebildet wird, liegt diese im Wesentlichen in Form sphärischer Tröpfchen vor. Das nicht-erfindungsgemäße Polysiloxan aus Vergleichsbeispiel V1 ist nicht homogen dispergierbar und bildet ungleichmäßig verteilte Schlieren im Reaktivharz.

### Vergleichsbeispiel 2 (V2)

Als Vergleichsbeispiel V2 dient nicht-modifiziertes Novolak "Resin 14772" (Plastics Engineering Company, Sheboygan, USA).

### Ref. 6

Herstellung von Reaktivharz-Lösungen zur Herstellung von Prüfkörpern und Beschichtung von Q-PANEL-Prüfblechen:
Es wurden jeweils 10 Teile der erfindungsgemäßen, modifizierten Phenolharze aus den Beispielen 1 - 5, bzw. 10 Teile des nicht-erfindungsgemäßen, modifizierten Phenolharzes aus dem Vergleichsbeispiel V1 bzw. 10 Teile des reinen, nicht-erfindungsgemäßen, nicht-modifizierten Phenolharzes Resin 14772 (Plastics Engineering Company, Sheboygan, USA), mit jeweils 1 Teil Urotropin und 10,0 Teile Ethylacetat (Fa. Bernd Kraft, >= 99 %) durch Schütteln über Nacht gelöst.

### Ref. Beispiel 7

Herstellung von Prüfkörpern zur Bestimmung von K1c und Tg: Die Lösungen aus Beispiel 6 werden 12 mm hoch in eine Aluminiumform gegossen und über 8 Tage von 40 °C auf 120 °C erwärmt. Danach wird jeweils 2 h bei 120 °C, 140 °C und 160 °C erhitzt und über Nacht gleichmäßig abgekühlt. Man erhält harte, braune, etwa 6 mm dicke Prüfplatten.

Die Tabelle 1 zeigt die Vergleichsdaten der modifizierten Phenol-Novolak-Harze.

**Tabelle 1**

| Beispiel | Siloxan-Additiv | Menge | Verhältnis C / Si | K1c | Tg | Phasenverteilung Siloxan-Additiv |
|---|---|---|---|---|---|---|
| | | % | | MN/m^{3/2} | °C | Mittlere Größe zweite Phase (ca. µm) |
| 1 | WACKER® WAX OH 350 D-RO | 5 | 6 | 0,9 | 116,3 | 0,005 - 0,020 |
| 2 | SIPELL® RE 63 F | 5 | 2,12 | n/a | n/a | 0,5 - 8 |
| 3 | Siliconöl 1 | 5 | 5 | 0,8 | 106,9 | 0,005 - 0,020 |
| 4 | Siliconöl 2 | 5 | 4,5 | n/a | 111,7 | vollständige Lösung |
| 5 | WACKER® WAX OH 350 D-RO | 2,5 | 6 | 0,85 | 113,5 | 0,05 - 0,6 |
| | WACKER® AK 100 SILICONOEL | 2,5 | 2,03 | | | |
| V1 | WACKER® AK 100 SILICONOEL | 5 | 2,03 | n/a | n/a | inhomogene Verteilung, Schlieren, ca. 100 µm |
| V2 | kein Additiv | n/a | n/a | 0,5 | 149,6 | n/a |

Diese erfindungsgemäß modifizierten Harze weisen einen im Vergleich zum nicht modifizierten Phenolharz erhöhten K1c Wert auf (Bestimmung analog der o.g. Beschreibung), der ein Maß für eine verbesserte Zähigkeit darstellt. Die erfindungsgemäß modifizierten Harze sind elastischer und weisen im Vergleich zum nicht modifizierten Phenolharz einen reduzierten Tg auf.

### Ref. Beispiel 8

Herstellung von mit Phenolharz beschichteten Q-PANEL-Prüfblechen:
Für die Versuche zur Sprödigkeitsbestimmung wurden Q-PANEL-Prüfbleche auf der gebürsteten Seite 3 x mit Aceton gereinigt und dann 1 h im Abzug abgelüftet. Anschließend wurde auf jedes Blech jeweils 3 ml der entsprechenden Phenolharzlösung aus Beispiel 6 gegeben und mit einem 100 µm-Rakel aufgestrichen und anschließend wurde das Lösemittel im Abzug über Nacht abgedampft.

Zur Härtung wurden die Proben in einen kalten Trockenschrank gelegt, innerhalb von 3 Stunden unter Spülung mit Stickstoff auf 160 °C aufgeheizt, 2 h bei dieser Temperatur gehalten und über Nacht auf 23 °C abgekühlt.

Nach dem Abdampfen des Lösungsmittels entsteht eine ca. 50 µm dicke gehärtete Harzschicht auf dem Blech.

### Beispiel 9

Prüfung der Widerstandsfähigkeit:
Mittels Kugelschlag-Prüfer kann die Beständigkeit der Beschichtung in isolierter Form betrachtet werden. Man erhält eine Aussage zur Elastizität, Schlagzähigkeit und Bruchfestigkeit einer Beschichtung.

Zum Nachweis der verbesserten Eigenschaften, also der Zähigkeit und Widerstandsfähigkeit gegen Schläge und Drücke, wurde nach Beispielen 6 und 8 eine jeweils ca. 50 µm dicke, gehärtete Schicht der erfindungsgemäßen Harze aus den Beispielen 1-5 auf einem Q-PANEL-Prüfblech hergestellt, bzw. als Vergleichsbeispiele eine ca. 50 µm dicke, gehärtete Schicht des nicht-modifiziertes Harzes Resin 14772 (Plastics Engineering Company, Sheboygan, USA) und des nicht-erfindungsgemäßen Harzes aus dem Vergleichsbeispiel V1. Die beschichteten Bleche wurden an einem Erichsen Kugelschlagprüfgerät, Modell 304-ASTM geprüft und die Ergebnisse durch einen geschulten Prüfer visuell ausgewertet: Dazu wird aus definierter, variabler Fallhöhe eine Kugel auf die Rückseite des Blechs fallen gelassen (jeweils Doppelversuche an unterschiedlicher Stelle). Die Schlagenergie ergibt sich aus der Fallhöhe multipliziert mit Fallgewicht, angegeben in inch (in) x pounds (lbs). Die Schlagenergie wird wie folgt verändert: 5, 10, 15, 20, 25, 30, 35, 40 (in x lbs). Die gebeulten Schlagstellen werden visuell auf Sprünge und Risse untersucht und relativ zur Referenz bewertet.

Tabelle 2 zeigt die Bewertung der Harz-Beschichtung auf Q-PANEL-Prüfblechen und deren Widerstandsfähigkeit mittels Kugelschlagprüfgerät.

**Tabelle 2**

| Harz aus Beispiel | Siloxan-Additiv | Beschreibung der Beschichtung | Impact Test | Beschreibung |
|---|---|---|---|---|
| 1 | WACKER®WAX OH 350 D-RO | Sehr glatt, glänzend | ++ | Keine Rissbildung bis 40 in x lbs |
| 2 | SIPELL® RE 63 F | Glatt, glänzend | + | Rissbildung bei 25 in x lbs |
| 3 | Siliconöl 1 | Sehr glatt, glänzend | ++ | Rissbildung bei 40 in x lbs |
| 4 | Siliconöl 2 | Sehr glatt, glänzend | + | Rissbildung bei 25 in x lbs |
| 5 | WACKER®WAX OH 350 D-RO WACKER® AK 100 SILICONOEL | Sehr glatt, glänzend | ++ | Keine Rissbildung bis 40 in x lbs |
| V1 | WACKER® AK 100 SILICONOEL | Leicht rau, ungleichmäßig | 0 | Rissbildung ab 5 in x lbs |
| V2 | kein Additiv | Leicht rau, ungleichmäßig | 0 | Rissbildung ab 5 in x lbs |

Dabei sind die Werte wie folgt zu verstehen:
"0" bedeutet Rissbild ähnlich der Referenz. Die Referenz zeigt bereits bei niedrigster Energie, ab 5 in x lbs, deutliche Rissbildung. Das Ausmaß der Rissbildung ist ähnlich der Referenz.
"+" bedeutet Rissbild besser, als bei der Referenz, d.h. deutliche Risse sind erst bei einer höheren Energie im Bereich 10 - 30 in x lbs zu erkennen, oder das Ausmaß der Rissbildung ist insgesamt deutlich reduziert im Vergleich zur Referenz.
"++" bedeutet, dass bis zu einer Energie von 30 in x lbs keine Risse zu erkennen sind.

Es zeigt sich, dass die erfindungsgemäßen Beschichtungen zu glatteren Oberflächen führen. Die erfindungsgemäßen, gehärteten Beschichtungen weisen eine wesentlich verbesserte Elastizität, Schlagzähigkeit und Bruchfestigkeit im Vergleich zum nichtmodifiziertem Vergleichsbeispiel V2 und zum nichterfindungsgemäß modifizierten Vergleichsbeispiel V1 auf.

### Beispiel 10

Herstellung von beschichteten Stützmittel:
20 - 40 mesh Fracking-Sand wurde mit 3,5% der erfindungsgemäßen Harze aus den Beispielen 1 und 5, bzw. als Vergleichsbeispiele mit 3,5% des nicht-modifizierten Harzes Resin 14772 (Plastics Engineering Company, Sheboygan, USA) und des nicht-erfindungsgemäßen Harzes aus dem Vergleichsbeispiel V1 im Schmelzverfahren beschichtet und mit 10 Gew.-% Urotropin, bezogen auf die Menge an Harz, gehärtet.

Tabelle 3 zeigt die Auswertung der Beschichtungsgüte von Fracking-Sand mit modifiziertem Harz aus Beispiel 1 mittels Elektronenmikroskop (REM).

**Tabelle 3**

| | Vergleichsbeispiel V2 | Beispiel 1 |
|---|---|---|
| gut beschichtet | 81% | 87% |
| mittelgut beschichtet | 16% | 11% |
| schlecht beschichtet | 3% | 2% |

Es zeigt sich, dass die erfindungsgemäße Reaktivharzzusammensetzung eine gleichmäßigere und effektivere Beschichtung der Oberfläche des Stützmittels bewirkt.

### Beispiel 11

Untersuchung der Druckstabilität von beschichteten Stützmitteln:
Die Druckstabilität der beschichteten Stützmittel gemäß Beispiel 8 wurde nach DIN EN ISO 13503-2 bei 14000 PSI und 18000 PSI Druck untersucht. Das Ergebnis ist in Tabelle 4 aufgezeigt.

**Tabelle 4**

| Fracking-Sand beschichtet mit Harz aus Beispiel | Menge gebildeter Feinanteil in % | |
|---|---|---|
| | bei 14000 PSI | bei 18000 PSI |
| 1 | 10,7 | 16 |
| 5 | 10 | 16,4 |
| V1 | 12,9 | n/a |
| V2 | 12,5 | 19,7 |

Es zeigt sich völlig überraschend, dass bei den erfindungsgemäß-beschichteten Stützmitteln 15-20% weniger Feinanteil gebildet wird, im Vergleich zum nicht-modifiziert beschichteten Stützmittel.

## Patentansprüche

1. Verwendung einer Reaktivharzzusammensetzung zur Beschichtung von Stützmitteln, **dadurch gekennzeichnet, dass**
die Reaktivharzzusammensetzung
- (A) 80-99,5 Gew.% mindestens eines Reaktivharzes, und
- (B) 0,5-20 Gew.% mindestens eines linearen oder cyclischen Organopolysiloxans,
enthält,
mit der Maßgabe, dass
- (B) mindestens 3 aufeinanderfolgende Si-O-Einheiten aufweist
- (B) mindestens einen Si-C-verknüpften, seitenkettenständigen oder endständigen organischen Rest R¹ aufweist, wobei
▪ R¹ mindestens 4 Atomen enthält, die ausgewählt werden aus der Gruppe aus C, N, P, O und S, und
▪ in R¹ mindestens 2 dieser Atome ein C sein müssen, und
- in (B) das Verhältnis der Summe aller C-Atome zur Summe aller Si-Atome mindestens 2,05 beträgt, und
(B) bei 20°C in fließfähiger Form vorliegt, oder durch Erwärmen in einem Temperaturbereich bis zu 250°C schmelzbar ist und dadurch in eine fließfähige Form gebracht werden kann, wobei die fließfähige Form wie in der Beschreibung definiert wird.

2. Verfahren zur Herstellung von beschichteten Stützmitteln, **dadurch gekennzeichnet, dass** eine Reaktivharzzusammensetzung in fliessfähiger Form, zusammen mit oder ohne mindestens einem Härter (C) und mit oder ohne mindestens einem Additiv (D), auf das Stützmittel aufgebracht wird und anschließend ausgehärtet wird,
**dadurch gekennzeichnet, dass**
die Reaktivharzzusammensetzung
- (A) 80-99,5 Gew.% mindestens eines Reaktivharzes, und
- (B) 0,5-20 Gew.% mindestens eines linearen oder cyclischen Organopolysiloxans,
enthält, mit der Maßgabe, dass
- (B) mindestens 3 aufeinanderfolgende Si-O-Einheiten aufweist
- (B) mindestens einen Si-C-verknüpften, seitenkettenständigen oder endständigen organischen Rest R¹ aufweist, wobei
▪ R¹ mindestens 4 Atomen enthält, die ausgewählt werden aus der Gruppe aus C, N, P, O und S, und
▪ in R¹ mindestens 2 dieser Atome ein C sein müssen, und
- in (B) das Verhältnis der Summe aller C-Atome zur Summe aller Si-Atome mindestens 2,05 beträgt, und
(B) bei 20°C in fließfähiger Form vorliegt, oder durch Erwärmen in einem Temperaturbereich bis zu 250°C schmelzbar ist und dadurch in eine fließfähige Form gebracht werden, wobei die fließfähige Form wie in der Beschreibung definiert wird.

3. Beschichtetes Stützmittel erhältlich aus dem Verfahren gemäß Anspruch 2.

4. Verwendung der beschichteten Stützmittel gemäß Anspruch 3 in Fracking-Förderverfahren für Erdöl und Erdgas.

## Claims

1. Use of a reactive resin composition for coating proppants, **characterized in that** the reactive resin composition comprises
- (A) 80%-99.5% by weight of at least one reactive resin, and
- (B) 0.5%-20% by weight of at least one linear or cyclic organopolysiloxane,
with the proviso that
- (B) has at least 3 successive Si-O units
- (B) has at least one Si-C-bonded pendant or terminal organic R¹ radical, where
▪ R¹ contains at least 4 atoms selected from the group of C, N, P, O and S, and
▪ at least 2 of these atoms in R¹ have to be a C, and
- in (B) the ratio of the sum total of all carbon atoms to the sum total of all silicon atoms is at least 2.05, and
(B) is in free-flowing form at 20°C, or can be melted by heating within a temperature range up to 250°C and hence can be converted to a free-flowing form, where free-flowing form is as defined in the description.

2. Process for producing coated proppants, **characterized in that** a reactive resin composition is applied to the proppant in free-flowing form, together with or without at least one hardener (C) and with or without at least one additive (D), and then hardened, **characterized in that**
the reactive resin composition comprises
- (A) 80%-99.5% by weight of at least one reactive resin, and
- (B) 0.5%-20% by weight of at least one linear or cyclic organopolysiloxane,
with the proviso that
- (B) has at least 3 successive Si-O units
- (B) has at least one Si-C-bonded pendant or terminal organic R¹ radical, where
▪ R¹ contains at least 4 atoms selected from the group of C, N, P, O and S, and
▪ at least 2 of these atoms in R¹ have to be a C, and
- in (B) the ratio of the sum total of all carbon atoms to the sum total of all silicon atoms is at least 2.05, and
(B) is in free-flowing form at 20°C, or can be melted by heating within a temperature range up to 250°C and hence can be converted to a free-flowing form, where free-flowing form is as defined in the description.

3. Coated proppant obtainable from the process according to Claim 2.

4. Use of the coated proppants according to Claim 3 in fracking production methods for mineral oil and natural gas.

## Revendications

1. Utilisation d'une composition de résine réactive pour le revêtement de moyens de soutènement, **caractérisée en ce que** la composition de résine réactive contient :
- (A) 80 à 99,5 % en poids d'au moins une résine réactive et
- (B) 0,5 à 20 % en poids d'au moins un organopolysiloxane linéaire ou cyclique,
à condition que
- (B) comprenne au moins 3 unités Si-0 successives,
- (B) comprenne au moins un radical organique R¹ positionné sur une chaîne latérale ou terminal, relié à Si-C,
- R¹ contenant au moins 4 atomes qui sont choisis dans le groupe constitué par C, N, P, O et S, et
- dans R¹, au moins 2 de ces atomes devant être un C, et
- dans (B), le rapport entre la somme de tous les atomes C et la somme de tous les atomes Si soit d'au moins 2,05, et
(B) se présente à 20 °C sous forme fluide, ou puisse être fondu par chauffage dans une plage de température de jusqu'à 250 °C, et puisse ainsi être mis sous une forme fluide, la forme fluide étant telle que définie dans la description.

2. Procédé de fabrication de moyens de soutènement revêtus, **caractérisé en ce qu'**une composition de résine réactive sous forme fluide, conjointement avec ou sans au moins un durcisseur (C) et avec ou sans au moins un additif (D), est appliquée sur le moyen de soutènement, puis durcie,
**caractérisé en ce que** la composition de résine réactive contient :
- (A) 80 à 99,5 % en poids d'au moins une résine réactive et
- (B) 0,5 à 20 % en poids d'au moins un organopolysiloxane linéaire ou cyclique,
à condition que
- (B) comprenne au moins 3 unités Si-0 successives,
- (B) comprenne au moins un radical organique R¹ positionné sur une chaîne latérale ou terminal, relié à Si-C,
- R¹ contenant au moins 4 atomes qui sont choisis dans le groupe constitué par C, N, P, O et S, et
- dans R¹, au moins 2 de ces atomes devant être un C, et
- dans (B), le rapport entre la somme de tous les atomes C et la somme de tous les atomes Si soit d'au moins 2,05, et
(B) se présente à 20 °C sous forme fluide, ou puisse être fondu par chauffage dans une plage de température de jusqu'à 250 °C, et puisse ainsi être mis sous une forme fluide, la forme fluide étant telle que définie dans la description.

3. Moyen de soutènement revêtu pouvant être obtenu par le procédé selon la revendication 2.

4. Utilisation des moyens de soutènement revêtus selon la revendication 3 dans des procédés d'extraction par fracking pour pétrole et gaz naturel.
